# EUROPÄISCHE PATENTSCHRIFT

(11) **EP 2 373 400 B1**
(45) Veröffentlichungstag und Bekanntmachung des Hinweises auf die Patenterteilung: **05.06.2013**
(21) Anmeldenummer: 09748714.4
(22) Anmeldetag: 04.11.2009
(51) Int. Cl.: B01D 53/14

(54) **VERFAHREN ZUR REINIGUNG VON GASEN UND GEWINNUNG VON SAUERGASEN**
PROCESS FOR THE PURIFICATION OF GASES AND RECUPERATION OF ACID GASES
PROCÉDÉ DE PURIFICATION DE GAZ ET RÉCUPÉRATION DE GAZ ACIDES

(30) Priorität: 17.12.2008 DE 102008062387
(43) Veröffentlichungstag der Anmeldung: 12.10.2011
(73) Patentinhaber: ThyssenKrupp Uhde GmbH, 44141 Dortmund (DE)
(72) Erfinder: MENZEL, Johannes, 45731 Waltrop (DE)
(74) Vertreter: Albrecht, Rainer Harald
(86) Internationale Anmeldenummer: PCT/EP2009/007895
(87) Internationale Veröffentlichungsnummer: WO 2010/069431

(56) Entgegenhaltungen:
- EP-A2- 0 077 492
- WO-A1-98/34715
- US-A- 4 345 918

## Beschreibung

Die Erfindung betrifft ein Verfahren zur Entfernung von Sauergasen aus Rohgas, wobei das Rohgas einer Absorptionskolonne zugeführt wird und dort bei erhöhtem Betriebsdruck mit einem Absorptionsmittel in Kontakt tritt, wobei das beladene Absorptionsmittel die Absorptionskolonne am Sumpf verlässt. Ein solches Verfahren mit beispielsweise aus WO 2004/105 919 A1, bzw. US 4345918 bekannt.

Rohgase, wie beispielsweise Erdgas oder Synthesegas, enthalten neben Wertstoffkomponenten auch Verunreinigungen, wie beispielsweise Schwefelwasserstoff, Kohlendioxid oder organische Schwefelkomponenten. Bei den organischen Schwefelverunreinigungen handelt es sich insbesondere um Merkaptane und Kohlenoxidsulfid. Diese Verunreinigungen müssen wegen der weiteren Nutzung aus den Rohgasen entfernt werden. Beispielsweise ist Schwefel in Form von Schwefelwasserstoff oder Kohlenoxidsulfid für viele Katalysatoren ein Gift, das deren Wirksamkeit blockiert. Auch gesetzliche Bestimmungen zwingen zur Senkung des Schwefelausstoßes. Aufgrund der Klimaerwärmung ist auch eine Reduktion des Kohlendioxidausstoßes erforderlich, dessen Anwesenheit in Erdgas darüber hinaus den Heizwert senkt. Zur Reinigung des Rohgases von den vorgenannten Komponenten, die folgend als Sauergase bezeichnet werden, steht eine Vielzahl technischer Verfahren zur Verfügung, bei denen das Gas mit einem Absorptionsmittel gereinigt wird. Zur Entfernung von Sauergasen können entweder chemische Absorptionsmittel oder physikalische Absorptionsmittel verwendet werden.

Die Anforderungen an den Reinheitsgrad hängen von der weiteren Verwendung des Produktgases und von der Art des Sauergases ab. Bei Schwefelkomponenten ist es in der Regel für die weitere technische Nutzung notwendig, diese bis auf ppm-Gehalte aus dem Rohgas zu entfernen. Bei Kohlendioxid wird entsprechend der weiteren Verwendung des Produktgases das Kohlendioxid entweder ganz, zum Teil oder auch nur so wenig wie möglich entfernt.

Bei der Entfernung von Schwefelkomponenten wird üblicherweise das in der Absorptionsmittel-Regeneration abgetrennte Sauergas in einer Clausanlage zu Schwefel weiter verarbeitet. Dies bringt zusätzliche Investitionskosten für die Clausanlage mit sich. Aufgrund des weltweiten Überangebots lässt sich für den erzeugten Schwefel kaum nennenswerten Verkaufserlös erzielen, so dass sich diese Investitionskosten nur schwer amortisieren. Als Alternative zu der Gewinnung von elementarem Schwefel wird daher immer häufiger die Speicherung von Sauergasen in Gaskavernen in Betracht gezogen. Dabei werden die Sauergase mittels aufwendiger Kompressoren auf einen Druck verdichtet, der es ermöglicht, die Sauergase in den dafür vorgesehenen unterirdischen Gasspeichern, beispielsweise einem ausgebeuteten Erdgasfeld, zu fördern. Zu diesem Zweck ist es daher besonders vorteilhaft, wenn die bei der Regeneration anfallenden Sauergase auf einem möglichst hohen Druckniveau vorliegen, da dadurch beträchtliche Investitions- und Betriebskosten für die Sauergaskompression eingespart werden. Auch für die Kohlendioxidsequestierung ist es vorteilhaft, wenn das entfernte Kohlendioxid bei einem möglichst hohen Regenerationsdruck zurück gewonnen wird.

Bei chemischen Absorptionsmitteln kann der Regenerationsdruck, bei dem die Sauergase anfallen, nur geringfügig erhöht werden, da es sonst zu einer beschleunigten Zersetzung des chemischen Absorptionsmittels kommt, da eine Erhöhung des Regenerationsdrucks eine Erhöhung der Siedetemperatur bewirkt.

Bei physikalischen Absorptionsmitteln ist es prinzipiell möglich, einen Teil der Sauergase auf einem höheren Druckniveau zu gewinnen. Dazu wird die Regeneration durch Druckabsenkung mittels mehrerer hintereinander geschalteter Flashstufen durchgeführt. Die in den Flashstufen freiwerdenden Sauergase werden dabei derjenigen Kompressionsstufe zugeführt, die dem entsprechenden Druckniveau der jeweiligen Flashstufe entspricht. Durch diese Verfahrensweise kann zwar der Energieaufwand für die Rekompression der Sauergase verringert werden, jedoch muss dennoch der größte Teil der Sauergase von Atmosphärendruck auf den Lagerenddruck verdichtet werden. Weiterhin ermöglicht eine Regeneration durch Druckabsenkung mittels Flashstufen nur eine beschränkte Entfernung der Sauergaskomponenten, da bei der Flashregeneration immer eine gewisse Restbeladung an Sauergasen in dem Absorptionsmittel verbleibt. Dies führt dazu, dass die geforderte Reinheit im Produktgas nicht erreicht wird. Beispielweise erfordert eine spezifikationsgemäße Entfernung von Schwefelwasserstoff eine Reinheit des Produktgases bis auf wenige ppm an Sauergaskomponenten. Physikalische Absorptionsmittel haben zudem den Nachteil, dass sie in Bezug auf die Wertstoffkomponenten nicht so selektiv wirken wie chemische Absorptionsmittel. Neben den Sauergasen werden beträchtliche Mengen an Nutzgasen coabsorbiert. Bei diesen Nutzgasen handelt es sich beispielsweise um Wasserstoff und Kohlenmonoxid bei der Synthesegasproduktion bzw. Methan bei der Erdgasreinigung.

Aufgabe der vorliegenden Erfindung ist es, ein Verfahren zur Verfügung zu stellen, bei dem die entfernten Sauergase bei einem hohen Regenerationsdruck anfallen, das Rohgas bis auf wenige ppm von den Sauergaskomponenten befreit wird und coabsorbierte Nutzgase vor der Regeneration des Absorptionsmittel von den Sauergasen getrennt werden.

Die Aufgabe wird erfindungsgemäß dadurch gelöst, dass das beladene Absorptionsmittel einer Hochdruckstrippkolonne zugeführt wird, in der durch Verdampfung eines Teils des Absorptionsmittels ein Strippdampf erzeugt wird, wobei durch den Strippdampf die im Absorptionsmittel coabsorbierten Nutzgase ausgetrieben und am Kopf der Hochstrippkolonne abgezogen werden, wobei das ebenfalls in den Kopfdämpfen enthaltene Absorptionsmittel verflüssigt und wieder in die Hochdruckstrippkolonne zurückgeführt wird und das den Sumpf der Hochdruckstrippkolonne verlassende noch mit Sauergasen beladene Absorptionsmittel einer Hochdruckregenerationskolonne zugeführt wird, in der die Sauergase abgetrennt und am Kopf der Hochdruckregenerationskolonne unter hohem Druck abgezogen werden wobei zumindest ein Teil der sauergasfraktion am Kopf der Hochdruckregenerationskolonne (47) als flüssige Phase anfällt das regenerierte Absorptionsmittel am Sumpf der Hochdruckregenerationskolonne abgezogen und zur Absorptionskolonne zurückgeführt wird.

Vorzugsweise wird ein physikalisches Absorptionsmittel mit einem niedrigen Siedepunkt eingesetzt. Dabei erweist sich Methanol als besonders günstig. Methanol kann selbst bei hohem Druck verdampft werden, ohne dass die Siedetemperatur eine Grenze überschreitet, oberhalb derer es zu einer Zersetzung des Absorptionsmittels kommt. Methanol hat zusätzlich den Vorteil, dass bei hohen Sauergaspartialdrücken eine höhere Beladung an Schwefelkomponenten erzielt werden kann als bei chemischen Absorptionsmitteln.

Als besonders vorteilhaft erweist es sich, wenn ein Absorptionsmittel eingesetzt wird dessen Siedepunkt bei Atmosphärendruck kleiner als 100 °C, vorzugsweise kleiner als 65 °C, ist.

Die Absorptionskolonne wird vorzugsweise bei einem Betriebsdruck von 5 bis 150 bar betrieben. Beim Einsatz von Methanol als Absorptionsmittel werden neben den Sauergasen ein Teil der im Rohgas enthaltenen Nutzgase coabsorbiert. Das beladene Absorptionsmittel wird am Sumpf der Absorptionskolonne abgezogen und erfindungsgemäß der Hochdruckstrippkolonne zugeführt.

Als energetisch besonders günstig erweist es sich, wenn das beladene Absorptionsmittel, welches die Absorptionskolonne am Sumpf verlässt in einem Wärmetauscher mit der heißen regenerierten Lösung, die am Sumpf der Hochdruckregenerationskolonne abgezogen wird, vorgewärmt wird. Dabei hat es sich als vorteilhaft erwiesen, wenn das beladene Absorptionsmittel, welches die Absorptionskolonne am Sumpf verlässt, eine Temperaturerhöhung von 50 bis 250 °C erfährt, bevor es der Hochdruckstrippkolonne zugeführt wird.

In der Hochdruckstrippkolonne wird mittels externer Wärmezufuhr ein Teil des Absorptionsmittels verdampft. Dies geschieht vorzugsweise mit einem Aufkocher im Sumpf der Hochdruckstrippkolonne. Durch das Verdampfen des Absorptionsmittels wird ein Strippdampfstrom erzeugt. In der Hochdruckstrippkolonne werden die Nutzgase ausgetrieben und am Kopf der Hochdruckstrippkolonne abgezogen. Das in den Kopfdämpfen enthaltende Absorptionsmittel wird mit einem Kondensator verflüssigt und wieder in die Hochdruckstrippkolonne zurückgeführt. Das nicht kondensierte Gas wird in die Absorptionskolonne zurückgeführt.

In einer weiteren Ausführung der Erfindung wird dem Sumpf der Hochdruckstrippkolonne ein externes Strippmedium, wie z.B. Stickstoff oder Kohlendioxid, zugeführt. Dadurch kann die Menge des durch Verdampfung des Absorptionsmittels erzeugten Strippdampfes verringert werden.

Die Hochdruckstrippkolonne wird vorzugsweise bei einem Druck von 5 bis 150 bar betrieben. Vorzugsweise liegt der Betriebsdruck der Hochdruckstrippkolonne über dem Betriebsdruck der Absorptionskolonne. Dadurch kann das nach dem Kondensator anfallende nicht kondensierte Gas mit dem vorhandenen Druckgefälle zur Absorptionskolonne zurückgefördert werden. Im Fall, dass das Druckniveau für eine Rückförderung nicht ausreicht, wird das Gas mittels eines Kompressors zur Absorptionskolonne zurückgefördert.

Die Güte der Nutzgasabtrennung wird durch die Heizleistung des Aufkochers, die Kühlleistung des Kondensators und durch die Art und Anzahl von Stoffaustauschelementen in der Hochdruckstrippkolonne beeinflusst. Dabei soll im Absorptionsmittel, das am Sumpf der Hochdruckstrippkolonne abgezogen wird, der Anteil an Nutzgasen minimiert werden. Zum anderen soll die Kopftemperatur der Hochdruckstrippkolonne so eingestellt werden, dass im Kondensator eine Kondensation mit leicht verfügbaren Kühlmitteln, wie beispielsweise Kühlwasser oder Kühlluft möglich ist. Die Kopftemperatur der Hochdruckstrippkolonne wird vom Anteil der im Kopfprodukt ebenfalls enthaltenen Sauergase beeinflusst. Auch der Druck bei dem die Hochdruckstrippkolonne betrieben wird beeinflusst die Kondensation der Kopfdämpfe. Vorzugsweise wird der Druck so gewählt, dass die Kopfdämpfe mittels leicht verfügbarer Kühlmedien, wie Kühlwasser oder Kühlluft, kondensiert werden können.

Das den Sumpf der Hochdruckstrippkolonne verlassende noch mit Sauergasen beladene Absorptionsmittel wird einer Hochdruckregenerationskolonne zugeführt. Falls erforderlich wird zur Förderung eine Pumpe eingesetzt.

Bei herkömmlichen Verfahren zur Rohgasreinigung wird die Regenerationskolonne bei einem niedrigen Druck betrieben. Der Druck beträgt meist nur 0,1 bis 1 bar. Dagegen findet bei dem erfindungsgemäßen Verfahren die Regeneration des Absorptionsmittels unter Hochdruck statt. Die Hochdruckregenerationskolonne arbeitet vorzugsweise bei einem Betriebsdruck von 5 bis 100 bar.

Am Sumpf der Hochdruckregenerationskolonne wird vorzugsweise ein Strippdampf erzeugt, indem ein Teil des Absorptionsmittels verdampft wird. In der Hochdruckregenerationskolonne werden die Sauergase abgetrennt und am Kopf der Hochdruckregenerationskolonne unter hohem Druck abgezogen. Über die Rückflussmenge des im Kondensator der Hochdruckregenerationskolonne kondensierten Kopfprodukts und über die Art und Anzahl der in der Hochdruckregenerationskolonne eingesetzten Stoffaustauschelemente wird eine nahezu vollständige Trennung von Sauergasen und Absorptionsmittel erreicht. Die am Kopf der Kolonne abgezogenen Sauergase werden mittels einer Fördereinrichtung in eine Lagerstätte gefördert.

In einer weiteren Ausführung der Erfindung wird dem Sumpf der Hochdruckregenerationskolonne ein externes Strippmedium, wie z.B. Stickstoff oder Kohlendioxid, zugeführt, wodurch sich die Menge des benötigten, indirekt erzeugten Strippdampfes verringern lässt.

Ein Teil der Erfindung besteht darin, dass zumindest ein Teil der Sauergasfraktion am Kopf der Hochdruckregenerationskolonne als flüssige Phase anfällt. Die flüssige Phase wird mittels einer Pumpe auf ein höheres Druckniveau gebracht und in die dafür vorgesehene Lagerstätte gefördert. Der Aggregatzustand, bei dem die Sauergasfraktion am Kopf der Hochdruckregenerationskolonne nach dem Kondensator anfällt, hängt von mehreren Faktoren ab. So begünstigen ein hohes Druckniveau und ein niedriges .Temperatumiveau die Bildung einer Flüssigphase. Auch eine hohe Kühlleistung des Kondensators wirkt sich günstig auf eine Verflüssigung der Sauergasfraktion aus. Ebenso hat die Zusammensetzung der Sauergasfraktion einen Einfluss auf den Aggregatzustand. So lassen sich schwefelwasserstoffhaltige Sauergasfraktionen deutlich leichter verflüssigen als beispielsweise kohlendioxidhaltige Sauergasfraktionen.

Für den Fall, dass die über Kopf gehenden Sauergasdämpfe mit den üblichen Kühlmedien kondensiert werden können, wird der nicht kondensierte Gasstrom in die Absorptionskolonne zurückgeführt. Vorzugsweise wird die Regenerationskolonne bei einem gegenüber der Absorptionskolonne höheren Druck betrieben, so dass allein aufgrund des vorhandenen Druckgefälles, der Gasstrom gefördert werden kann. Wenn das Druckniveau nicht ausreicht, wird die notwendige Druckerhöhung mittels eines Verdichters durchgeführt.

Es hat sich als besonders günstig erwiesen, die nicht kondensierten Gase aus den Kopfprodukten der Hochdruckstrippkolonne und der Hochdruckregenerationskolonne mittels eines gemeinsamen Verdichters zur Absorptionskolonne zurückzuführen. Dies spart Investitions- und Betriebskosten.

Das regenerierte Absorptionsmittel wird am Sumpf der Hochdruckregenerationskolonne abgezogen und zur Absorptionskolonne zurückgeführt. Wenn das Sauergas hauptsächlich Kohlendioxid enthält und eine Verflüssigung mit den üblicherweise zur Verfügung stehenden Kühlmittelniveaus (Luftkühlung, Wasserkühlung) nicht erzielt werden kann, werden die den Kondensator verlassenden Sauergasdämpfe mittels eines Kompressors auf den geforderten Lagerdruck gebracht.

Das vollständig von Sauergaskomponenten befreite Absorptionsmittel verlässt die Hochdruckregenerationskolonne am Sumpf. Das die Hochdruckregenerationskolonne verlassende Absorptionsmittel befindet sich gegenüber dem Sumpf der Hochdruckstrippkolonne auf einem höheren Temperaturniveau. Als energetisch vorteilhaft erweist es sich, wenn das regenerierte Absorptionsmittel, das am Sumpf der Hochdruckregenerationskolonne abgezogen wird, einen Teil seiner Wärme an den Aufkocher der Hochdruckstrippkolonne überträgt. Eine weitere Übertragung der Wärme kann mittels Wärmetauscher an das kalte, die Absorptionskolonne verlassende Absorptionsmittel erfolgen.

Falls erforderlich wird das Absorptionsmittel noch durch eine Kälteanlage weiter abgekühlt. Das regenerierte und gekühlte Absorptionsmittel gelangt mittels einer Pumpe auf den Kopf der Absorptionskolonne zurück.

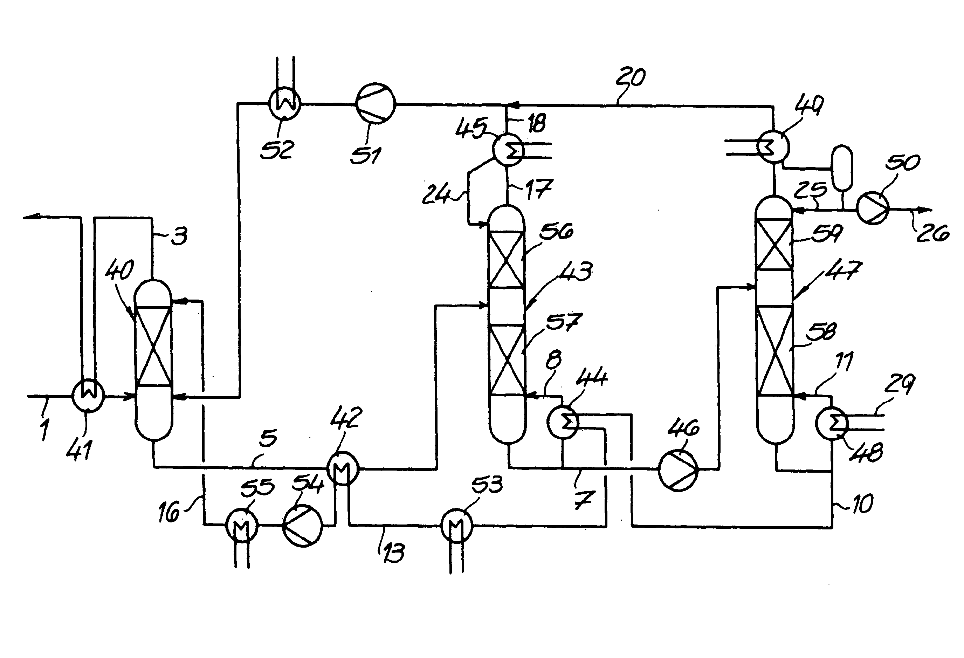

Weitere Merkmale und Vorteile der Erfindung ergeben sich aus der Beschreibung eines Ausführungsbeispiels anhand einer Zeichnung und aus der Zeichnung selbst. Die Figur zeigt das Anlagenschema des erfindungsgemäßen Verfahrens.

Das Rohgas 1 wird nach Kühlung mit dem vom Kopf der Absorptionskolonne 40 kommenden Produktgas 3 vor dem Eintritt in die Absorptionskolonne 40 in einem Gas-Gaswärmetauscher 41 vorgekühlt, wobei die im Gas enthaltenen Sauergaskomponenten im Gegenstrom durch das auf den Kopf der Absorptionskolonne 40 aufgegebene regenerierte Absorptionsmittel 16 entfernt werden.

Das gereinigte Produktgas 3 wird am Kopf der Absorptionskolonne 40 abgezogen. Das am Sumpf der Absorptionskolonne 40 abgezogene, mit Sauergasen beladene Absorptionsmittel 5 wird über einen Wärmetauscher 42 im Gegenstrom mit dem heißen, regenerierten Absorptionsmittel 13 vorgewärmt und auf den Kopf einer Hochdruckstrippkolonne 43 geführt. In der Hochdruckstrippkolonne 43 werden die im Absorptionsmittelstrom 5 enthaltenen Sauergaskomponenten von den ebenfalls in der Absorptionskolonne 40 coabsorbierten Nutzgasen getrennt, wobei die Nutzgase die Hochdruckstrippkolonne 43 über Kopf verlassen und die Sauergaskomponenten die Hochdruckstrippkolonne 43 zusammen mit dem Absorptionsmittel am Sumpf verlassen. Bei der Hochdruckstrippkolonne 43 handelt es sich um eine besondere Ausführung einer Hochdruckdestillationskolonne. Am Sumpf der Hochdruckstrippkolonne 43 wird mit einem Aufkocher 44 ein Strippdampf 8 erzeugt. Durch die entsprechende Mengeneinstellung des Strippdampfes 8 und einer entsprechenden Anzahl von Stoffaustauschelementen 57 im Unterteil der Hochdruckstrippkolonne 43 wird der Anteil an Nutzgasen im Stoffstrom 7 minimiert, der die Hochdruckstrippkolonne 43 am Sumpf verlässt. Gleichzeitig wird durch die im oberen Teil der Hochdruckstrippkolonne 43 installierten Stoffaustauschelemente 56 und einer entsprechenden Einstellung des Rücklaufes 24 über den Kondensator 45 dafür gesorgt, dass das in der Hochdruckstrippkolonne 43 dampfförmig vorhandene Absorptionsmittel innerhalb der Stoffaustauschelemente 56 aus dem Gasstrom entfernt wird und dadurch nahezu vollständig die Hochdruckstrippkolonne 43 am Sumpf verlässt. Der am Kopf der Hochdruckstrippkolonne 43 abgezogene Stoffstrom 17 enthält Nutzgase und Reste an Sauergasen. Der Stoffstrom 17 wird im Kondensator 45 gekühlt, wobei ein Teil als Rücklauf wieder auf den Kopf der Hochdruckstrippkolonne 43 aufgegeben wird. Der den Kondensator 45 verlassende Strom 18 wird zusammen mit dem aus der Absorptionsmittelregenerierung stammenden Stoffstrom 20 mittels eines Verdichters 51 und nach Kühlung im Kühler 52 wieder in die Absorptionskolonne 40 zurückgeführt.

Der, die Hochdruckstrippkolonne 43 am Sumpf verlassende Stoffstrom 7, wird mittels einer Pumpe 46 der Hochdruckregenerationskolonne 47 zugeführt, in der die im Absorptionsmittel noch vorhandenen Sauergase abgetrennt werden. Am Sumpf der Hochdruckregenerationskolonne 47 wird mit einem Aufkocher 48 durch Verdampfen eines Teils des Absorptionsmittels ein Strippdampf 11 erzeugt, wobei durch den Strippdampf 11 die Sauergase aus dem Absorptionsmittel ausgetrieben werden. Der Aufkocher 48 wird mit einem Wärmeträgermedium 29 betrieben. Durch Einstellung der Strippdampfmenge 11 und durch eine entsprechende Anzahl an Stoffaustauschelementen 58 im Unterteil der Hochdruckregenerationskolonne 47 wird eine nahezu vollständige Abtrennung der Sauergase vom Absorptionsmittel erreicht. Durch die im oberen Teil der Hochdruckregenerationskolonne 47 installierten Stoffaustauschelemente 59 und der Einstellung einer ausreichend hohen Rückflussmenge des im Kondensator 49 kondensierten Kopfprodukts 25 wird sicher gestellt, dass das in den Kolonnendämpfen vorhandene Absorptionsmittel nahezu vollständig von den Sauergasen getrennt wird. Das am Kopf der Hochdruckregenerationskolonne 47 anfallende flüssige Sauergasprodukt 26 wird am Kondensatorablauf abgezogen. Die flüssige Sauergasfraktion 26 steht nach einer Druckerhöhung durch eine Pumpe 50 zur Reinjektion in die dafür vorgesehene Lagerstätte bereit. Der nicht kondensierte Gasstrom 20 wird mit dem Verdichter 51 in die Absorptionskolonne 40 zurückgeführt. Am Sumpf der Hochdruckregenerationskolonne 47 fällt ein nahezu reiner Absorptionsmittelstrom 10 an, der einen Teil seiner Wärme an den Aufkocher 44 und in den Wärmetauschem 53 und 42 abgibt. Nach einer Druckerhöhung durch eine Pumpe 54 erfolgt eine Kühlung mittels eines Kühlers 55, bei dem die Wärme an ein Kältemittel abgegeben wird. Das Absorptionsmittel wird dann auf dem Kopf der Absorptionskolonne 40 zurückgeführt.

## Patentansprüche

1. Verfahren zur Entfernung von Sauergasen aus Rohgas (1), wobei das Rohgas (1) einer Absorptionskolonne (40) zugeführt wird und dort bei erhöhtem Betriebsdruck mit einem Absorptionsmittel (16) in Kontakt tritt, wobei das mit Sauergasen und Nutzgasen beladene Absorptionsmittel (5) die Absorptionskolonne(40)amSumpfverlässt, **dadurch gekennzeichnet, dass** das beladene Absorptionsmittel (5) einer Hochdruckstrippkolonne (43) zugeführt wird, wobei durch einen Strippdampf (8) die im Absorptionsmittel coabsorbierten Nutzgase ausgetrieben und am Kopf der Hochdruckstrippkolonne (43) abgezogen werden, wobei das in den Kopfdämpfen enthaltene Absorptionsmittel verflüssigt und wieder in die Hochdruckstrippkolonne (43) zurückgeführt wird und das den Sumpf der Hochdruckstrippkolonne (43) verlassende noch mit Sauergasen beladene Absorptionsmittel (7) einer Hochdruckregenerationskolonne (47) zugeführt wird, in der die Sauergase abgetrennt und am Kopf der Hochdruckregenerationskolonne (47) unter hohem Druck abgezogen werden, **wobei zumindest ein Teil der Sauergasfraktion am Kopf der Hochdruckregenerationskolonne (47) als flüssige Phase anfällt** und das regenerierte Absorptionsmittel am Sumpf der Hochdruckregenerationskolonne (47) abgezogen und zur Absorptionskolonne (40) zurückgeführt wird.

2. Verfahren nach Anspruch 1, **dadurch gekennzeichnet, dass** ein physikalisches Absorptionsmittel mit einem niedrigen Siedepunkt eingesetzt wird.

3. Verfahren nach Anspruch 1, **dadurch gekennzeichnet, dass** in der Hochdruckregenerationskolonne (47) durch Verdampfen eines Teils des Absorptionsmittels ein Strippdampf (11) erzeugt wird, wobei durch den Strippdampf (11) die Sauergase aus dem Absorptionsmittel ausgetrieben werden.

4. Verfahren nach Anspruch 1, **dadurch gekennzeichnet, dass** die am Kopf der Hochdruckregenerationskolonne (47) anfallende flüssige Phase mittels einer Pumpe (50) in eine Lagerstätte gefördert wird.

5. Verfahren nach Anspruch 1, **dadurch gekennzeichnet, dass** das beladene Absorptionsmittel (5), welches die Absorptionskolonne (40) am Sumpf verlässt in einem Wärmetauscher (42) mit der heißen regenerierten Lösung (13) vorgewärmt wird.

6. Verfahren nach Anspruch 1, **dadurch gekennzeichnet, dass** die Absorptionskolonne (40) bei einem Betriebsdruck von 5 bis 150 bar betrieben wird.

7. Verfahren nach Anspruch 1, **dadurch gekennzeichnet, dass** das beladene Absorptionsmittel (5), welches die Absorptionskolonne (40) am Sumpf verlässt, eine Temperaturerhöhung von 50 bis 250 °C erfährt, bevor es der Hochdruckstrippkolonne (43) zugeführt wird.

8. Verfahren nach Anspruch 1, **dadurch gekennzeichnet, dass** die Hochdruckstrippkolonne (43) bei einem Betriebsdruck von 5 bis 150 bar betrieben wird.

9. Verfahren nach Anspruch 1, **dadurch gekennzeichnet, dass** die Hochdruckregenerationskolonne (47) bei einem Betriebsdruck von 5 bis 100 bar betrieben wird.

10. Verfahren nach Anspruch 1, **dadurch gekennzeichnet, dass** am Kopf der Hochdruckstrippkolonne (43) abgezogene, nicht kondensierte Gase in die Absorptionskolonne (40) zurückgeführt werden.

11. Verfahren nach Anspruch 1, **dadurch gekennzeichnet, dass** nicht kondensierte Gase aus dem Kopfprodukt der Hochdruckregenerationskolonne (47) in die Absorptionskolonne (40) zurückgeführt werden.

12. Verfahren nach den Ansprüchen 10 und 11, **dadurch gekennzeichnet, dass** nicht kondensierte Gase aus den Kopfprodukten der Hochdruckstrippkolonne (43) und der Hochdruckregenerationskolonne (47) mittels eines gemeinsamen Verdichters zur Absorptionskolonne (40) zurückgeführt werden.

13. Verfahren nach Anspruch 1, **dadurch gekennzeichnet, dass** das regenerierte Absorptionsmittel (10) einen Teil seiner Wärme an den Kocher (44) der Hochdruckstrippkolonne (43) überträgt.

14. Verfahren nach Anspruch 1, **dadurch gekennzeichnet, dass** der Strippdampf (8) durch Verdampfung eines Teils des Absorptionsmittels erzeugt wird.

15. Verfahren nach Anspruch 1, **dadurch gekennzeichnet, dass** dem Sumpf der Hochdruckstrippkolonne (43) ein externes Strippmedium zugeführt wird.

16. Verfahren nach Anspruch 1, **dadurch gekennzeichnet, dass** dem Sumpf der Hochdruckregenerationskolonne (47) ein externes Strippmedium zugeführt wird.

## Claims

1. A method for removing acid gases from crude gas (1), wherein the crude gas (1) is fed to an absorption column (40) and comes into contact there at raised operating pressure with an absorption agent (16), wherein the absorption agent (5) charged with acid gases and useful gases leaves the absorption column (40) at the sump, **characterised in that** the charged absorption agent (5) is fed to a high-pressure stripping column (43), wherein the useful gases co-absorbed in the absorption agent are expelled by a stripping vapour (8) and drawn off at the head of the high-pressure stripping column (43), wherein the absorption agent contained in the head vapours is liquefied and fed back again into the high-pressure stripping column (43) and the absorption agent (7) still charged with acid gases and leaving the sump of the high-pressure stripping column (43) is fed to a high-pressure regeneration column (47), in which the acid gases are separated out and drawn off at high pressure at the head of the high-pressure regeneration column (47), wherein at least a part of the acid-gas fraction occurs as a liquid phase at the head of the high-pressure regeneration column (47) and the regenerated absorption agent is drawn off at the sump of the high-pressure regeneration column (47) and fed back to the absorption column (40).

2. The method according to claim 1, **characterised in that** a physical absorption agent with a low boiling point is used.

3. The method according to claim 1, **characterised in that** a stripping vapour (11) is generated in the high-pressure regeneration column (47) by evaporation of a part of the absorption agent, wherein the acid gases are expelled from the absorption agent by the stripping vapour (11).

4. The method according to claim 1, **characterised in that** the liquid phase occurring at the head of the high-pressure regeneration column (47) is conveyed by means of a pump (50) into a storage facility.

5. The method according to claim 1, **characterised in that** the charged absorption agent (5) which leaves the absorption column (40) at the sump is preheated in a heat exchanger (42) with the hot regenerated solution (13).

6. The method according to claim 1, **characterised in that** the absorption column (40) is operated at an operating pressure of 5 to 150 bar.

7. The method according to claim 1, **characterised in that** the charged absorption agent (5) which leaves the absorption column (40) at the sump undergoes a temperature increase from 50 to 250°C before it is fed to the high-pressure stripping column (43).

8. The method according to claim 1, **characterised in that** the high-pressure stripping column (43) is operated at an operating pressure of 5 to 150 bar.

9. The method according to claim 1, **characterised in that** the high-pressure regeneration column (47) is operated at an operating pressure of 5 to 100 bar.

10. The method according to claim 1, **characterised in that** uncondensed gases drawn off at the head of the high-pressure stripping column (43) are fed back into the absorption column (40).

11. The method according to claim 1, **characterised in that** uncondensed gases from the head product of the high-pressure regeneration column (47) are fed back into the absorption column (40).

12. The method according to claims 10 and 11, **characterised in that** uncondensed gases from the head product of the high-pressure stripping column (43) and the high-pressure regeneration column (47) are fed back to the absorption column (40) by means of a common compressor.

13. The method according to claim 1, **characterised in that** the regenerated absorption agent (10) transfers a part of its heat to a boiler (44) of the high-pressure stripping column (43).

14. The method according to claim 1, **characterised in that** the stripping vapour (8) is generated by evaporation of a part of the absorption agent.

15. The method according to claim 1, **characterised in that** an external stripping medium is fed to the sump of the high-pressure stripping column (43).

16. The method according to claim 1, **characterised in that** an external stripping medium is fed to the sump of the high-pressure regeneration column (47).

## Revendications

1. Procédé destiné à l'élimination de gaz acides d'un gaz brut (1), le gaz brut (1) étant acheminé à une colonne d'absorption (40) et y entrant en contact à une pression de service augmentée avec un milieu d'absortion (16), le milieu d'absorption (5) chargés de gaz acides et de gaz utiles quittant à cet effet la colonne d'absorption (40) au pied **caractérisé en ce que** le milieu d'absorption (5) chargé est acheminé à une colonne de désessenciement à haute pression (43), les gaz utiles coabsorbés dans le milieu d'absorption étant extraits par une vapeur de désessenciement (8) et entraînés à la tête de la colonne de désessenciement à haute pression (43), le milieu d'absorption contenu dans les vapeurs de tête étant liquéfié et à nouveau redirigé dans la colonne de désessenciement à haute pression (43), et le milieu d'absorption (7) encore chargé de gaz acides quittant le pied de la colonne de désessenciement à haute pression (43) est acheminé à une colonne de régénération à haute pression (47), dans laquelle les gaz acides sont séparés et sont entraînés sous haute pression à la tête de la colonne de régénération à haute pression (47), une partie de la fraction de gaz acides au moins se déposant en tant que phase liquide à la tête de la colonne de régénération à haute pression (47) et le milieu d'absorption régénéré étant entraîné au pied de la colonne de régénération à haute pression (47) et redirigé vers la colonne d'absorption (40).

2. Procédé selon la revendication 1 **caractérisé en ce qu**'un milieu d'absorption physique avec un point débullition bas est utilisé.

3. Procédé selon la revendication 1 **caractérisé en ce que** dans la colonne de régénération à haute pression (47) une vapeur de désessenciement (11) est produite par vaporisation d'une partie du milieu d'absorption, les gaz acides étant extraits du milieu d'absorption par la vapeur de désessenciement (11).

4. Procédé selon la revendication 1 **caractérisé en ce que** la phase liquide se déposant à la tête de la colonne de régénération à haute pression (47) est transportée dans un dépôt au moyen d'une pompe (50).

5. Procédé selon la revendication 1 **caractérisé en ce que** le milieu d'absorption (5) chargé qui quitte la colonne d'absorption (40) au pied, est préchauffé dans un échangeur de chaleur (42) avec la solution (13) chaude régénérée.

6. Procédé selon la revendication 1 **caractérisé en ce que** la colonne d'absorption (40) est utilisée à une pression d'exploitation de 5 à 150 bars.

7. Procédé selon la revendication 1 **caractérisé en ce que** le milieu d'absorption (5) chargé qui quitte la colonne d'absorption (40) au pied, subit une hausse de température de 50 à 250° C avant d'être acheminé à la colonne de désessenciement à haute pression (43).

8. Procédé selon la revendication 1 **caractérisé en ce que** la colonne de désessenciement à haute pression (43) est utilisée à une pression d'exploitation de 5 à 150 bars.

9. Procédé selon la revendication 1 **caractérisé en ce que** la colonne de régénération à haute pression (47) est utilisée à une pression d'exploitation de 5 à 100 bars.

10. Procédé selon la revendication 1 **caractérisé en ce que** les gaz non condensés entraînés à la tête de la colonne de désessenciement à haute pression (43), sont redirigés dans la colonne d'absorption (40).

11. Procédé selon la revendication 1 **caractérisé en ce que** des gaz non condensés sont redirigés du produit de tête de la colonne de régénération à haute pression (47) dans la colonne d'absorption (40).

12. Procédé selon les revendications 10 et 11 **caractérisé en ce que** des gaz non condensés sont redirigés des produits de tête de la colonne de désessenciement à haute pression (43) et de la colonne de régénération à haute pression (47) à la colonne d'absorption (40) au moyen d'un compresseur commun.

13. Procédé selon la revendication 1 **caractérisé en ce que** le milieu d'absorption (10) régénéré transmet une partie de sa chaleur au bouilleur (44) de la colonne de désessenciement à haute pression (43).

14. Procédé selon la revendication 1 **caractérisé en ce que** la vapeur de désessenciement (8) est produite par vaporisation d'une partie du milieu d'absorption.

15. Procédé selon la revendication 1 **caractérisé en ce qu**'un milieu de désessenciement externe est acheminé au pied de la colonne de désessenciement à haute pression (43).

16. Procédé selon la revendication 1 **caractérisé en ce qu**'un milieu de désessenciement externe est acheminé au pied de la colonne de régénération à haute pression (47).
